# EUROPEAN PATENT APPLICATION

(11) **EP 3 957 426 A1**
(43) Date of publication of application: **23.02.2022**
(21) Application number: 20791831.9
(22) Date of filing: 08.04.2020
(51) Int. Cl.: B23K 9/007, B23K 9/02, B23K 9/23, F16B 5/08

(54) **JOINING STRUCTURE**

(30) Priority: 19.04.2019 JP 2019080120
(71) Applicant: Panasonic Intellectual Property Management Co., Ltd., Osaka-shi, Osaka 540-6207 (JP)
(72) Inventor: FUJIWARA, Junji, Osaka-shi, Osaka 540-6207 (JP)
(74) Representative: Vigand, Philippe
(86) International application number: PCT/JP2020/015776
(87) International publication number: WO 2020/213492

(57) **Abstract**

Second member (20) includes a material that is difficult to weld to first member (10). First member (10) is provided with non-through hole (11) having a depth not penetrating in a thickness direction. Third member (30) is welded, via penetrating part (21) of second member (20), to an inner peripheral surface and a bottom of non-through hole (11) and opening surface (10a) of first member (10) opened by penetrating part (11) of second member (20). Second member (20) is compressed by flange (31) and first member (10) by solidification contraction of third member (30), and second member (20) is therefore fixed between flange (31) of third member (30) and first member (10).

## Description

### TECHNICAL FIELD

The present invention relates to a joining structure.

### BACKGROUND ART

PTL 1 discloses a joining structure in which a first metal material and a dissimilar material that is difficult to weld to the first metal material are overlapped with each other, and a filler material (welding wire) is arc-welded via a penetrating part of the dissimilar material.

At this time, a flange is formed from the melted filler material so as to cover an outer periphery on an upper surface of the penetrating part of the dissimilar material. As a result, the dissimilar material and the first metal material are fixed by a compression fixing force between the flange and the first metal material by solidification contraction of the filler material with respect to the first metal material.

### Citation List

### Patent Literature

PTL 1: International Publication No. 2018/030272

### SUMMARY OF THE INVENTION

### Technical problem

In the invention disclosed in PTL 1, for example, when a hole diameter of the penetrating part is small, a welding area of the filler material in the first metal material is also small, and there is a possibility that joining strength may be insufficient.

The present invention has been made in view of such a point, and an object of the present invention is to increase a welding area of a filler material to secure joining strength.

### Solution to problem

The present invention is directed to a joining structure joining, to each other, a first member including a metal material, a second member including a material that is difficult to weld to the first member, and a third member including a filler material welded to the first member, and the following solution is achieved.

That is, in a first aspect of the present invention, the first member has a non-through hole having a depth not penetrating the first member in a thickness direction. The second member has a penetrating part that opens at a position corresponding to the non-through hole. The third member has a flange that presses a peripheral edge of the penetrating part, and is arc-welded, via the penetrating part, to an inner peripheral surface and a bottom of the non-through hole of the first member and an opening surface of the first member opened by the penetrating part of the second member. The second member is compressed by the flange and the first member by solidification contraction of the third member with respect to the first member, and the second member is therefore fixed between the flange of the third member and the first member.

In the first aspect of the present invention, the second member includes a material that is difficult to weld to the first member. The first member is provided with the non-through hole having a depth not penetrating in the thickness direction. The third member is arc-welded, via the penetrating part of the second member, to the inner peripheral surface and the bottom of the non-through hole of the first member and the opening surface of the first member opened by the penetrating part of the second member. The second member is compressed by the flange and the first member by solidification contraction of the third member, and the second member is therefore fixed between the flange of the third member and the first member.

As described above, the first member is provided with the non-through hole, and the third member is arc-welded to the inner peripheral surface and the bottom of the non-through hole and the opening surface of the first member opened by the penetrating part of the second member. Thus, a welding area of the third member can be increased. In particular, when a plate thickness of the first member is larger than a plate thickness of the second member, it is possible to ensure penetration to the first member while minimizing a thermal influence on the second member.

This can secure joining strength between the first member, the second member, and the third member.

In a second aspect of the present invention, according to the first aspect of the present invention, the flange protrudes radially outward from the penetrating part on a surface of the second member opposite to the first member.

In the second aspect of the present invention, the second member can be compressed and fixed between the flange and the first member by pressing a surface of the second member opposite to the first member by the flange.

In a third aspect of the present invention, according to the first aspect, the penetrating part is defined by the peripheral edge. The peripheral edge includes a tapered part tapered toward the first member. The flange presses the tapered part.

In the third aspect of the present invention, the tapered part provided in the peripheral edge allows the filler material having been melted to easily flow toward the non-through hole. Further, by solidifying the flange into a shape along the tapered part, a thickness of the flange protruding from the second member can be suppressed.

In a fourth aspect of the present invention, according to any one of the first to third aspects of the present invention, the non-through hole includes a bottom having a flat shape and an inclined part inclined toward the bottom.

In the fourth aspect of the present invention, the inclined part provided in the non-through hole allows the filler material having been melted to easily flow toward the bottom of the non-through hole. In addition, the bottom of the non-through hole having a flat shape can increase the welding area of the third member and secure the joining strength.

In a fifth aspect of the present invention, according to any one of the first to third aspects of the present invention, the non-through hole has a tapered shape tapered toward the bottom of the non-through hole.

In the fifth aspect of the present invention, the non-through hole having a tapered shape tapered toward the bottom allows the filler material having been melted to easily flow toward the bottom of the non-through hole.

In a sixth aspect of the present invention, according to any one of the first to third aspects of the present invention, the non-through hole has a tapered shape that widens toward the bottom of the non-through hole.

In the sixth aspect of the present invention, the non-through hole has a tapered shape that widens toward the bottom. As a result, when the filler material having been melted is solidified in a wide portion of the non-through hole, the third member bites into the non-through hole, and the joining strength can be increased.

In a seventh aspect of the present invention, according to any one of the first to sixth aspect of the present invention, the non-through hole includes a plurality of small non-through holes smaller than the non-through hole.

In the seventh aspect of the present invention, by providing the plurality of small non-through holes, the filler material having been melted can be welded while being dispersed in the plurality of small non-through holes. Further, the third member bites into the plurality of small non-through holes, and thus a wedge effect can be obtained in the plurality of small non-through holes to improve joining stability.

An eighth aspect of the present invention, according to any one of the first to seventh aspects of the present invention, includes a fixing member overlapped with a surface of the second member opposite to the first member. The fixing member has a fixing hole that opens at a position corresponding to the penetrating part and the non-through hole. The third member is arc-welded, via the fixing hole and the penetrating part, to an inner peripheral surface and a bottom of the non-through hole and an opening surface of the first member opened by the penetrating part of the second member. The flange presses the peripheral edge of the penetrating part via the fixing member. The fixing member and the second member are compressed by the flange and the first member by the solidification contraction of the third member, and thus the fixing member and the second member are fixed between the flange and the first member.

In the eighth aspect of the present invention, the fixing member is overlapped with the second member. The third member is arc-welded to the inner peripheral surface and the bottom of the non-through hole and the opening surface of the first member opened by the penetrating part of the second member via the fixing hole of the fixing member and the penetrating part of the second member. The fixing member and the second member are compressed by the flange and the first member by solidification contraction of the third member, and thus the fixing member and the second member are fixed between the flange of the third member and the first member.

Thus, when the third member is arc-welded to the inner peripheral surface and the bottom of the non-through hole of the first member and the opening surface of the first member opened by the penetrating part of the second member, the flange can be formed while suppressing an amount of heat input to the second member by the fixing member. Then, the second member as a dissimilar material can be sandwiched and fixed between the first member and the fixing member.

In a ninth aspect of the present invention, according to any one of the first to eighth aspects of the present invention, the second member further includes a step that opens at a surface opposite to the first member. The penetrating part is disposed on a bottom surface of the step.

In the ninth aspect of the present invention, the penetrating part is disposed on the bottom surface of the step of the second member. Thus, the flange of the third member is disposed in the step, and thus the flange can be prevented from protruding from the second member.

In a tenth aspect of the present invention, according to the ninth aspect of the present invention, the bottom surface of the step is inclined toward the penetrating part.

In the tenth aspect of the present invention, the bottom surface of the step inclined toward the penetrating part allows the filler material having been melted to easily flow toward the penetrating part.

In an eleventh aspect of the present invention, according to any one of the first to tenth aspects of the present invention, the third member includes a first joint welded to the first member and a second joint welded to the first joint and constituting the flange.

In the eleventh aspect of the present invention, the third member formed separately into the first joint and the second joint allows selective use of a welding method or welding condition in consideration of material characteristics of the second member.

For example, when the filler material having been melted is welded to the first member via the penetrating part, short-circuit welding in which spread of arc is small may be performed with heat input necessary for melting to form the first joint. Thereafter, pulse welding with positive polarity or alternating current in which the arc spreads largely may be performed with such a low heat input not to melt the second member to form the second joint. As a result, the flange can be formed while suppressing heat input amount to the second member.

In a twelfth aspect of the present invention, according to any one of the first to eleventh aspects of the present invention, the non-through hole has a smaller size than the penetrating part. The opening surface is a region of the upper surface of the first member within the penetrating part.

As described above, a diameter of the non-through hole is smaller than a diameter of the penetrating part of the second member (a diameter of the opening surface of the first member opened by the penetrating part of the second member). This makes it possible to perform welding while suppressing heat input to the first member and the second member. Further, the inner peripheral surface and the bottom surface of the non-through hole and the opening surface form a convex shape of the third member. The convex shape increases a surface area to be joined. The concave shape exhibits an anchor effect like a wedge to further improve the joining strength and reliability.

A thirteenth aspect of the present invention relates to a joining structure including a first member, a second member, and a third member. The first member has an upper surface and a lower surface opposite the upper surface. The first member has a non-through hole formed on the upper surface. The first member includes a metal material. The second member includes a penetrating part larger than the non-through hole, and a peripheral edge defining the penetrating part. The second member includes a material that is difficult to weld to the first member. The second member is disposed on the upper surface of the first member such that the penetrating part opens at a position corresponding to the non-through hole. The third member includes a welded part and a flange connected to the welded part via the penetrating part. The welded part is arc-welded to an inner peripheral surface and a bottom of the non-through hole and a periphery of the non-through hole on the upper surface of the first member. The flange covers the peripheral edge. The third member includes a filler material welded to the first member. The second member is compressed by the flange and the first member by solidification contraction of the third member, and the second member is therefore fixed between the flange and the first member.

As described above, the first member is provided with the non-through hole, and the third member is arc-welded to the inner peripheral surface and the bottom of the non-through hole and the opening surface of the first member opened by the penetrating part of the second member. Thus, a welding area of the third member can be increased. In particular, when a plate thickness of the first member is larger than a plate thickness of the second member, it is possible to ensure penetration to the first member while minimizing a thermal influence on the second member.

A fourteenth aspect of the present invention relates to a joining method including preparation of a first member, preparation of a second member, and formation of a third member. The first member has an upper surface and a lower surface opposite the upper surface. The first member has a non-through hole formed on the upper surface. The first member includes a metal material. The second member includes a penetrating part and a peripheral edge defining the penetrating part. The second member includes a material that is difficult to weld to the first member. The second member is disposed on the upper surface of the first member such that the penetrating part is located corresponding to the non-through hole and an opening surface of the first member opened by the penetrating part is formed. The third member is formed by being arc-welded, via the penetrating part, to the inner peripheral surface and the bottom of the non-through hole of the first member and the opening surface of the first member. The third member includes a filler material welded to the first member. The third member includes a flange that presses the peripheral edge. The second member is compressed by the flange and the first member by solidification contraction of the third member, and the second member is therefore fixed between the flange of the third member and the first member.

In the fourteenth aspect of the present invention, the second member includes a material that is difficult to weld to the first member. The first member is provided with the non-through hole having a depth not penetrating in the thickness direction. The third member is arc-welded, via the penetrating part of the second member, to the inner peripheral surface and the bottom of the non-through hole of the first member and the opening surface of the first member opened by the penetrating part of the second member. The second member is compressed by the flange and the first member by solidification contraction of the third member, and the second member is therefore fixed between the flange of the third member and the first member.

As described above, the first member is provided with the non-through hole, and the third member is arc-welded to the inner peripheral surface and the bottom of the non-through hole and the opening surface of the first member opened by the penetrating part of the second member. Thus, a welding area of the third member can be increased. In particular, when a plate thickness of the first member is larger than a plate thickness of the second member, it is possible to ensure penetration to the first member while minimizing a thermal influence on the second member.

### Advantageous effect of invention

In the present invention, the welding area of the filler material can be increased to secure the joining strength.

### BRIEF DESCRIPTION OF DRAWINGS

FIG. 1 is a side sectional view for describing a joining structure according to a first exemplary embodiment.
FIG. 2 is a side sectional view for describing a joining structure according to a second exemplary embodiment.
FIG. 3 is a side sectional view for describing a joining structure according to a third exemplary embodiment.
FIG. 4 is a side sectional view for describing a joining structure according to a fourth exemplary embodiment.
FIG. 5 is a side sectional view for describing a joining structure according to a fifth exemplary embodiment.
FIG. 6 is a side sectional view for describing a joining structure according to a sixth exemplary embodiment.
FIG. 7 is a side sectional view for describing a joining structure according to a seventh exemplary embodiment.
FIG. 8 is a side sectional view for describing a joining structure according to an eighth exemplary embodiment.
FIG. 9 is a side sectional view for describing a joining structure according to a ninth exemplary embodiment.
FIG. 10 is a side sectional view for describing a joining structure according to a tenth exemplary embodiment.
FIG. 11 is a side sectional view for describing a joining structure according to an eleventh exemplary embodiment.

### DESCRIPTION OF EMBODIMENTS

Hereinafter, exemplary embodiments of the present invention will be described with reference to the drawings. Note that the following description of preferred exemplary embodiments is merely exemplary in nature, and is not intended to limit the present invention, its application, or its use.

### «First exemplary embodiment»

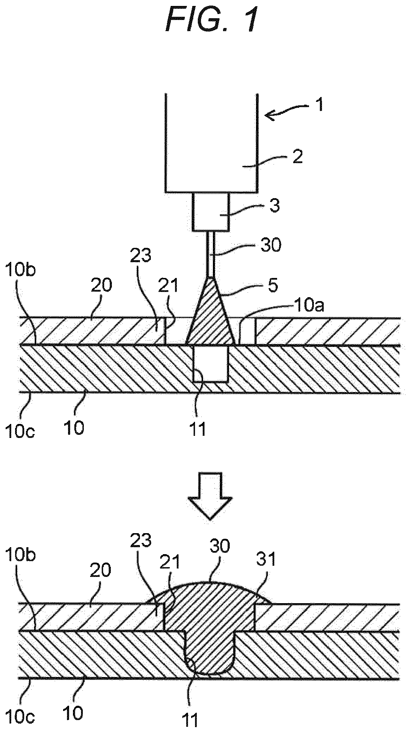

FIG. 1 illustrates a joining structure that joins first member 10 including a metal material, second member 20 including a material that is difficult to weld to first member 10, and third member 30 including a filler material to each other.

First member 10 is a member having a plate shape and including a metal material. First member 10 has non-through hole 11 having a depth not penetrating in the thickness direction. In an example illustrated in FIG. 1, non-through hole 11 is formed by a circular recess opened upward. Non-through hole 11 is formed as a non-through hole by, for example, milling, lathing, drilling, or laser machining. First member 10 has upper surface 10b and lower surface 10c opposite to upper surface 10b. Upper surface 10b faces second member 20. Non-through part 11 extends from upper surface 10b toward lower surface 10c.

Second member 20 is a member having a plate shape and including a material that is difficult to weld to first member 10. Second member 20 is overlapped on an upper side of first member 10. Second member 20 includes penetrating part 21 having a circular shape. Penetrating part 21 opens at a position corresponding to non-through hole 11 of first member 10. The upper surface of first member 10 opened by penetrating part 21 of second member 20 overlapped with first member 10 is opening surface 10a. Opening surface 10a corresponds to an upper surface of non-through hole 11. Second member 20 further includes peripheral edge 23 that defines penetrating part 21.

In the present exemplary embodiment, penetrating part 21 is described as a circular through hole, but may be an elliptical or elongated through hole. Penetrating part 21 may be a through groove. The through groove penetrates from an upper surface to a lower surface in a thickness direction of second member 20. The through groove is further opened at both ends or one end in a length direction of the through groove. In this respect, the through groove is different from an elongated through hole. The elongated through hole is closed at both ends in the length direction of the through hole. For example, when the through groove is opened at both ends in the length direction of the through groove, second member 20 includes at least two independent plates disposed on first member 10. The two plates are arranged with an elongated gap therebetween. This gap forms the through groove as penetrating part 21. In a case where second member 20 includes a plurality of independent plates and forms a plurality of through grooves, third member 30 as a filler material having been melted is welded to first member 10 via the plurality of through grooves, and then second member 20 is sandwiched between third member 30 and first member 10 to fix second member 20 to first member 10.

Third member 30 includes a filler material that is a metal material of a similar type to first member 10. Here, the metal materials of a similar type are metals that can be welded to each other, and are metal materials that join well by welding, such as iron-based metal materials and non-ferrous metal materials, in addition to the same materials. In other words, the metal materials of a similar type are materials having good compatibility in welding.

Specifically, examples of a combination of first member 10 and third member 30 at time of welding include the following. Examples of a combination of iron-based metal materials include mild steel and mild steel, stainless steel and stainless steel, mild steel and high-tensile strength steel, and high-tensile strength steel and high-tensile strength steel. Examples of a combination of nonferrous metal materials include aluminum and aluminum, aluminum and an aluminum alloy, and an aluminum alloy and an aluminum alloy.

Further, second member 20 as a dissimilar material includes a material different from the materials of first member 10 and third member 30 as metal materials of a similar type, and includes a material that is difficult to weld to first member 10 and third member 30.

For example, when first member 10 and third member 30 as metal materials of a similar type include an iron-based metal material, second member 20 as a dissimilar material is a non-ferrous metal material such as a copper material or an aluminum material. In addition, for example, a resin material such as carbon fiber reinforced plastics (CFRP) or polyethylene terephthalate (PET) is also exemplified as a dissimilar material to the metal material.

In the following description, a case where a soft steel material is used as first member 10, an aluminum material is used as second member 20, and a soft steel material is used as third member 30 serving as a filler material will be described.

Arc welder 1 includes nozzle 2 and tip 3. Nozzle 2 supplies shielding gas or the like to a welded portion of an object to be welded. Tip 3 supplies a welding current to third member 30.

Arc welder 1 generates arc 5 by supplying a welding current while feeding third member 30 as a filler material to non-through hole 11 via penetrating part 21. Arc 5 is irradiated to an inner peripheral surface and a bottom surface (bottom) of non-through hole 11 of first member 10 and opening surface 10a as the upper surface of first member 10. Third member 30 melted by arc 5 is melt-bonded to the inner peripheral surface and the bottom surface of non-through hole 11, and is layered in opening surface 10a on the upper surface of first member 10 and penetrating part 21 of the second member. Then, after filling the inside of penetrating part 21, third member 30 having been melted flows out to peripheral edge 23 on the upper surface of second member 20 and spreads in a flange shape.

In a process in which third member 30 having been melted becomes bead, third member 30 is provided with flange 31 that presses peripheral edge 23 of penetrating part 21. Flange 31 protrudes radially outward from penetrating part 21 on a surface (upper surface in FIG. 1) of second member 20 opposite to first member 10.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, first member 10 is provided with non-through hole 11, and third member 30 is arc-welded to the inner peripheral surface and the bottom surface of non-through hole 11 and opening surface 10a of first member 10. Thus, a welding area of third member 30 can be increased. In particular, when a plate thickness of first member 10 is larger than a plate thickness of second member 20, it is possible to ensure penetration to first member 10 while minimizing a thermal influence on second member 20. Further, the inner peripheral surface and the bottom surface of non-through hole 11 and opening surface 10a form a convex shape of third member 30. The convex shape increases a surface area to be joined. The concave shape exhibits an anchor effect like a wedge to further improve the joining strength and reliability. A diameter of non-through part 11 is smaller than a diameter of penetrating part 21 of second member 20 (a diameter of opening surface 10a of first member 10 opened by penetrating part 21 of second member 20). This makes it possible to perform welding while suppressing heat input to first member 10 and second member 20.

As a result, joining strength between first member 10, second member 20, and third member 30 can be secured.

### «Second exemplary embodiment»

Hereinafter, the same parts as those in the first exemplary embodiment will be denoted by the same reference marks, and only differences will be described.

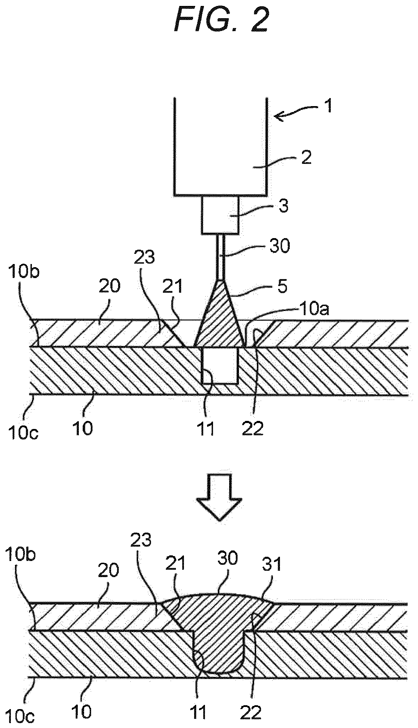

As illustrated in FIG. 2, first member 10 has non-through hole 11 having a depth not penetrating in the thickness direction. Non-through hole 11 is formed by a circular recess opened upward.

Second member 20 includes penetrating part 21 that opens at a position corresponding to non-through hole 11 of first member 10. Penetrating part 21 is defined by peripheral edge 23. Peripheral edge 23 includes tapered part 22 tapered toward first member 10.

Third member 30 is melted by arc 5. Third member 30 having been melted flows toward non-through hole 11 along tapered part 22 of penetrating part 21, and is melt-bonded to the inner peripheral surface and the bottom of non-through hole 11 and opening surface 10a of first member 10.

Third member 30 having been melted fills the inside of penetrating part 21 to spread in a flange shape on an upper surface of tapered part 22.

In a process in which third member 30 having been melted becomes bead, third member 30 is provided with flange 31 that presses tapered part 22.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, tapered part 22 provided on peripheral edge 23 allows third member 30 having been melted to easily flow toward non-through hole 11. Further, by forming flange 31 in a shape along tapered part 22, a thickness of flange 31 protruding from second member 20 can be suppressed.

### «Third exemplary embodiment»

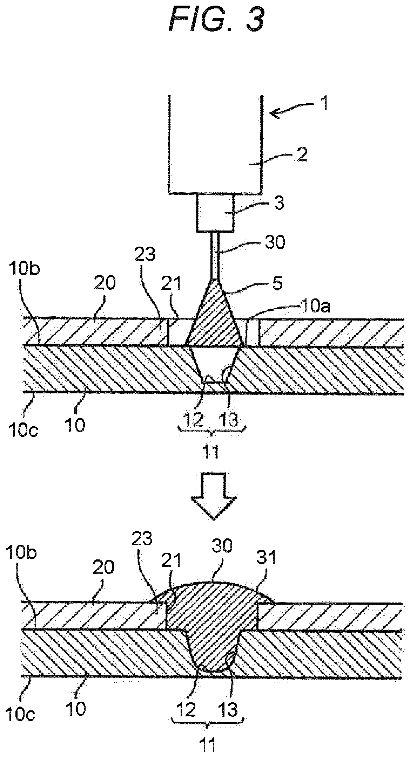

As illustrated in FIG. 3, first member 10 has non-through hole 11 having a depth not penetrating in the thickness direction. Non-through hole 11 has bottom 12 having a flat shape, and inclined part 13 inclined toward bottom 12.

Second member 20 includes penetrating part 21 that opens at a position corresponding to non-through hole 11 of first member 10.

Third member 30 is melted by arc 5. Third member 30 having been melted flows toward bottom 12 along inclined part 13 of non-through hole 11, and is melt-bonded to the inner peripheral surface and the bottom of non-through hole 11 and opening surface 10a of first member 10.

Then, after filling the inside of penetrating part 21, third member 30 having been melted flows out to peripheral edge 23 on the upper surface of second member 20 and spreads in a flange shape.

In a process in which third member 30 having been melted becomes bead, third member 30 is provided with flange 31 that presses peripheral edge 23.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, inclined part 13 provided on non-through hole 11 allows third member 30 having been melted to easily flow toward bottom 12 of non-through hole 11. In addition, bottom 12 of non-through hole 11 having a flat shape can increase the welding area of third member 30 and secure the joining strength.

### «Fourth exemplary embodiment»

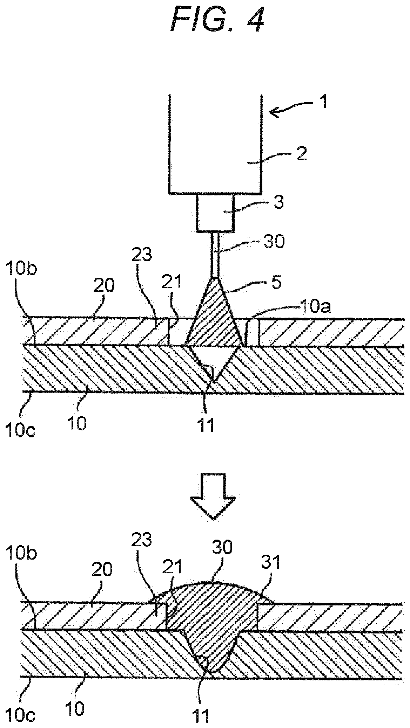

As illustrated in FIG. 4, first member 10 has non-through hole 11 having a depth not penetrating in the thickness direction. Non-through hole 11 has a tapered shape tapered toward the bottom of non-through hole 11.

Second member 20 includes penetrating part 21 that opens at a position corresponding to non-through hole 11 of first member 10.

Third member 30 is melted by arc 5. Third member 30 having been melted flows toward the bottom of non-through hole 11 along a tapered shape of non-through hole 11, and is melt-bonded to the inner peripheral surface and the bottom of non-through hole 11 and opening surface 10a of first member 10.

Then, after filling the inside of penetrating part 21, third member 30 having been melted flows out to peripheral edge 23 on the upper surface of second member 20 and spreads in a flange shape.

In a process in which third member 30 having been melted becomes bead, third member 30 is provided with flange 31 that presses peripheral edge 23.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, non-through hole 11 having a tapered shape tapered toward the bottom allows third member 30 having been melted to easily flow toward the bottom of non-through hole 11.

### «Fifth exemplary embodiment»

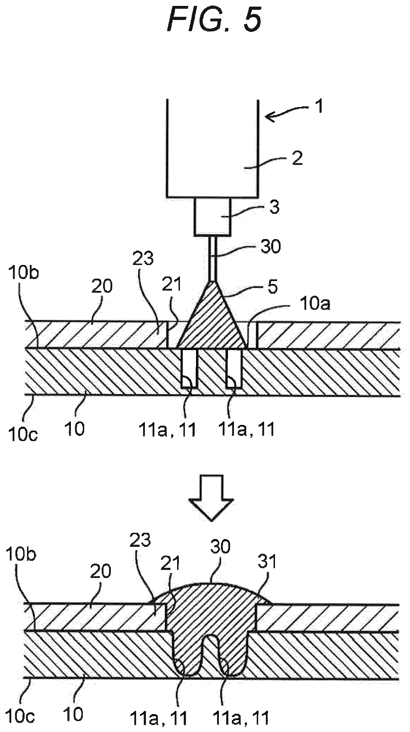

As illustrated in FIG. 5, non-through hole 11 includes a plurality of small non-through holes 11a. First member 10 has the plurality of small non-through holes 11a having a depth not penetrating in the thickness direction. The plurality of small non-through holes 11a is formed by a circular recess opened upward.

Second member 20 includes one penetrating part 21 that opens at a position corresponding to the plurality of small non-through holes 11a of first member 10.

Third member 30 is melted by arc 5. Third member 30 having been melted is dispersed in the plurality of small non-through holes 11a and melt-bonded to an inner peripheral surface and a bottom of each of small non-through holes 11a and opening surface 10a of first member 10.

Then, after filling the inside of penetrating part 21, third member 30 having been melted flows out to peripheral edge 23 on the upper surface of second member 20 and spreads in a flange shape.

In a process in which third member 30 having been melted becomes bead, third member 30 is provided with flange 31 that presses peripheral edge 23.

As third member 30 solidifies and contracts with respect to first member 10, second member 20 is compressed by flange 31 and first member 10. By this compression, second member 20 as a dissimilar material is fixed between flange 31 and first member 10.

As described above, in the joining structure according to the present exemplary embodiment, by providing the plurality of small non-through holes 11a, third member 30 having been melted can be welded while being dispersed in the plurality of small penetrating parts 11a. Further, third member 30 bites into the plurality of small non-through holes 11a, and thus a wedge effect can be obtained in the plurality of small non-through holes 11a to improve joining stability.

### «Sixth exemplary embodiment»

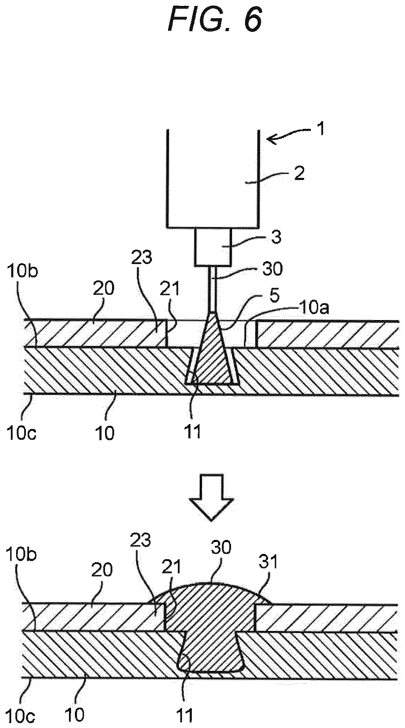

As illustrated in FIG. 6, first member 10 has non-through hole 11 having a depth not penetrating in the thickness direction. Non-through hole 11 has a tapered shape that widens toward the bottom of non-through hole 11.

Second member 20 includes penetrating part 21 that opens at a position corresponding to non-through hole 11 of first member 10.

Third member 30 is melted by arc 5. Third member 30 having been melted is melt-bonded to the inner peripheral surface and the bottom of non-through hole 11 and opening surface 10a of first member 10.

Then, after filling the inside of penetrating part 21, third member 30 having been melted flows out to peripheral edge 23 on the upper surface of second member 20 and spreads in a flange shape.

In a process in which third member 30 having been melted becomes bead, third member 30 is provided with flange 31 that presses peripheral edge 23.

As third member 30 solidifies and contracts with respect to first member 10, second member 20 is compressed by flange 31 and first member 10. By this compression, second member 20 as a dissimilar material is fixed between flange 31 and first member 10.

As described above, in the joining structure according to the present exemplary embodiment, non-through hole 11 has a tapered shape that widens toward the bottom. As a result, when third member 30 having been melted is solidified in a wide portion of non-through hole 11, third member 30 bites into non-through hole 11, and the joining strength can be increased.

### «Seventh exemplary embodiment»

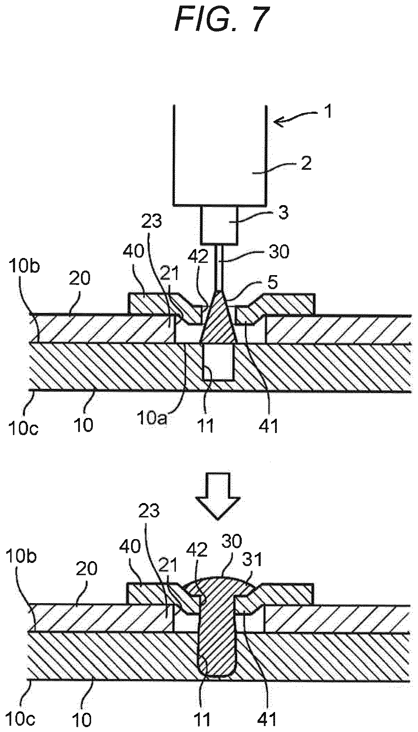

As illustrated in FIG. 7, first member 10 has non-through hole 11 having a depth not penetrating in the thickness direction. Non-through hole 11 is formed by a circular recess opened upward.

Second member 20 includes penetrating part 21 that opens at a position corresponding to non-through hole 11 of first member 10. Fixing member 40 is overlapped with the upper surface of second member 20.

Fixing member 40 includes, for example, a rectangular or disk-shaped metal material. An outer shape of fixing member 40 may be any shape that presses peripheral edge 23 of second member 20.

Fixing member 40 includes a metal material of a similar type that can be welded to first member 10 and third member 30. Fixing member 40 may include a material different from the materials of first member 10 and third member 30.

Fixing member 40 is provided with, in a center, embossed protrusion 41 pressed toward second member 20 in a tapered shape. Protrusion 41 is inserted into penetrating part 21.

Fixing member 40 has fixing hole 42 that opens at a position corresponding to penetrating part 21 and non-through hole 11. Fixing hole 42 is formed in a bottom surface of protrusion 41.

Third member 30 is melted by arc 5. Third member 30 having been melted flows toward non-through hole 11 via fixing hole 42 and penetrating part 21, and is melt-bonded to the inner peripheral surface and the bottom of non-through hole 11 and opening surface 10a of first member 10. Third member 30 having been melted spreads in a flange shape on an upper surface of fixing member 40.

In a process in which third member 30 having been melted becomes bead, third member 30 is provided with flange 31 that presses a peripheral edge of fixing hole 42 of fixing member 40. Flange 31 indirectly presses peripheral edge 23 of second member 20 via fixing member 40.

As third member 30 solidifies and contracts, second member 20 is compressed by flange 31 and first member 10. By this compression, fixing member 40 and second member 20 are fixed between flange 31 and first member 10.

As described above, in the joining structure according to the present exemplary embodiment, when third member 30 is welded to non-through hole 11 of first member 10, flange 31 can be formed while suppressing an amount of heat input to second member 20 by fixing member 40. Then, second member 20 as a dissimilar material can be sandwiched and fixed between first member 10 and fixing member 40.

### «Eighth exemplary embodiment»

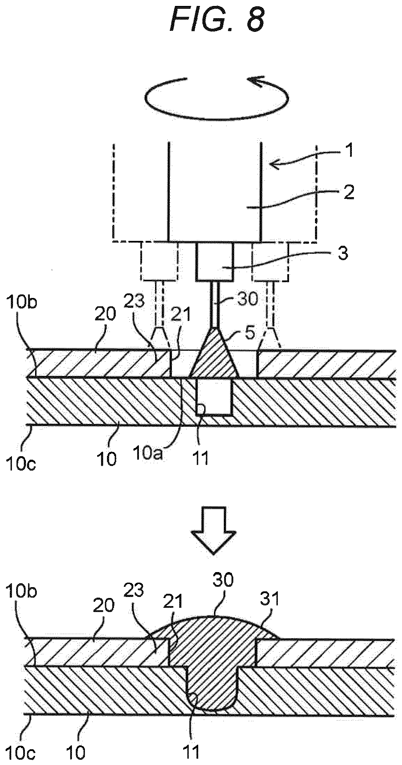

As illustrated in FIG. 8, first member 10 has non-through hole 11 having a depth not penetrating in the thickness direction. Non-through hole 11 is formed by a circular recess opened upward.

Second member 20 includes penetrating part 21 that opens at a position corresponding to non-through hole 11 of first member 10.

Third member 30 is melted by arc 5. Third member 30 having been melted is melt-bonded to the inner peripheral surface and the bottom of non-through hole 11 and opening surface 10a of first member 10.

At this time, third member 30 having been melted is supplied to peripheral edge 23 by turning nozzle 2 of arc welder 1 along peripheral edge 23 of second member 20. As a result, third member 30 having been melted fills the inside of penetrating part 21 and spreads in a flange shape on peripheral edge 23 on the upper surface of second member 20.

In a process in which third member 30 having been melted becomes bead, third member 30 is provided with flange 31 that presses peripheral edge 23.

As third member 30 solidifies and contracts with respect to first member 10, second member 20 is compressed by flange 31 and first member 10. By this compression, second member 20 as a dissimilar material is fixed between flange 31 and first member 10.

As described above, in the joining structure according to the present exemplary embodiment, nozzle 2 of arc welder 1 is turned, and peripheral edge 23 of second member 20 is arc-welded in a spiral trajectory by AC welding or short-circuit welding with low heat input, and thus flange 31 can be formed while suppressing heat input.

### «Ninth exemplary embodiment»

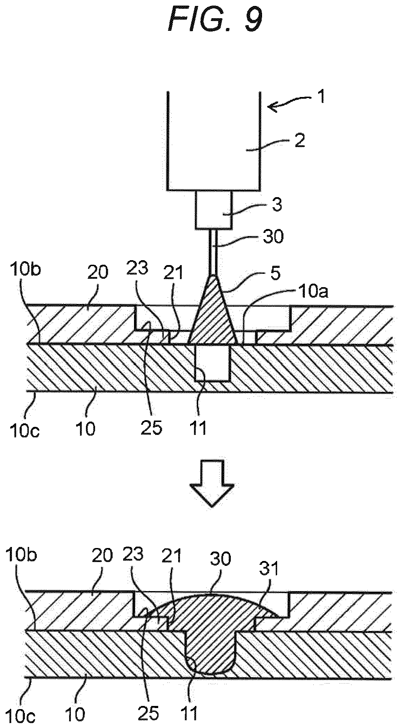

As illustrated in FIG. 9, first member 10 has non-through hole 11 having a depth not penetrating in the thickness direction. Non-through hole 11 is formed by a circular recess opened upward.

Second member 20 includes step 25 that opens at the surface opposite to first member 10 (upper surface in FIG. 9), and penetrating part 21 formed on the bottom surface of step 25. Penetrating part 21 opens at a position corresponding to non-through hole 11 of first member 10.

Third member 30 is melted by arc 5. Third member 30 having been melted is melt-bonded to the inner peripheral surface and the bottom of non-through hole 11 and opening surface 10a of first member 10.

Then, after filling the inside of penetrating part 21, third member 30 having been melted flows out to peripheral edge 23 on the upper surface of second member 20, that is, the bottom surface of step 25, and spreads in a flange shape.

In a process in which third member 30 having been melted becomes bead, third member 30 is provided with flange 31 that presses peripheral edge 23.

As third member 30 solidifies and contracts, second member 20 is compressed by flange 31 and first member 10. By this compression, second member 20 as a dissimilar material is compressed and fixed between flange 31 and first member 10.

As described above, in the joining structure according to the present exemplary embodiment, flange 31 of third member 30 is disposed in step 25, and thus flange 31 can be prevented from protruding from second member 20.

### «Tenth exemplary embodiment»

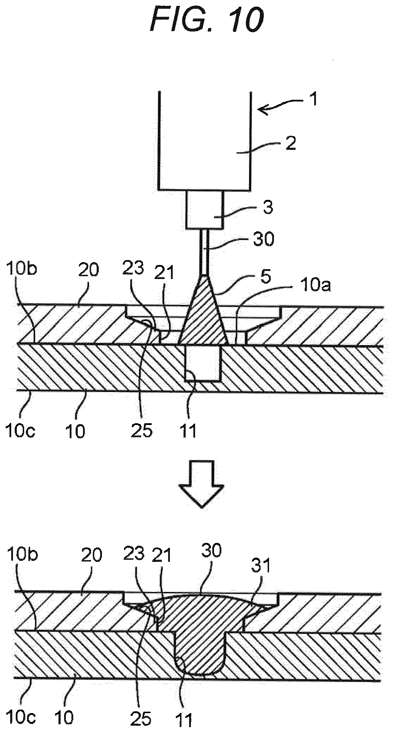

As illustrated in FIG. 10, first member 10 has non-through hole 11 having a depth not penetrating in the thickness direction. Non-through hole 11 is formed by a circular recess opened upward.

Second member 20 includes step 25 that opens at a surface opposite to first member 10 (upper surface in FIG. 10), and penetrating part 21 formed on a bottom surface of step 25. The bottom surface of step 25 is inclined toward penetrating part 21. Penetrating part 21 opens at a position corresponding to non-through hole 11 of first member 10.

Third member 30 is melted by arc 5. Third member 30 having been melted flows toward penetrating part 21 along an inclined surface of step 25, and is subsequently melt-bonded to the inner peripheral surface and the bottom of non-through hole 11 and opening surface 10a of first member 10.

Then, after filling the inside of penetrating part 21, third member 30 having been melted flows out to peripheral edge 23 on the upper surface of second member 20, that is, the bottom surface of step 25, and spreads on the inclined surface of step 25 in a flange shape.

In a process in which third member 30 having been melted becomes bead, third member 30 is provided with flange 31 that presses the inclined surface of step 25.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, the bottom surface of step 25 is inclined toward penetrating part 21, and thus third member 30 having been melted easily flows toward penetrating part 21. Further, flange 31 of third member 30 is disposed in step 25, and thus flange 31 can be prevented from protruding from second member 20.

### «Eleventh exemplary embodiment»

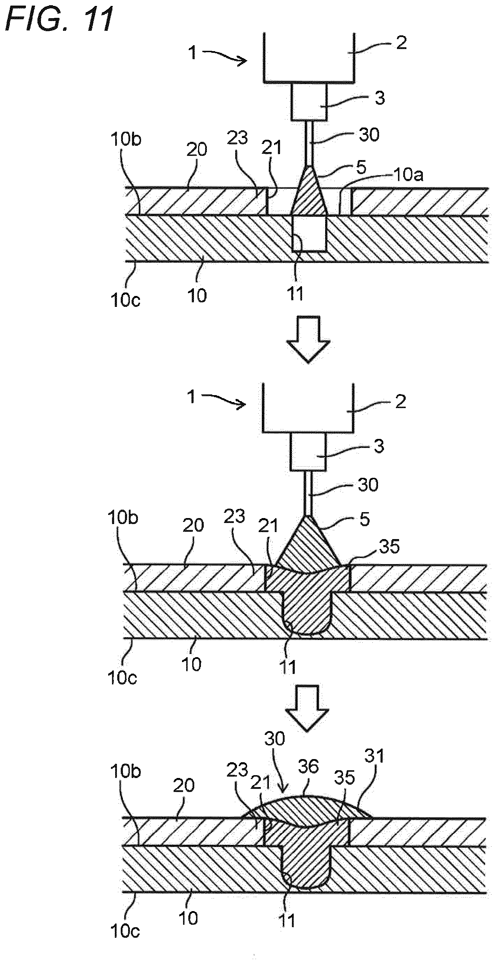

As illustrated in FIG. 11, first member 10 has non-through hole 11 having a depth not penetrating in the thickness direction. Non-through hole 11 is formed by a circular recess opened upward.

Second member 20 includes penetrating part 21 that opens at a position corresponding to non-through hole 11 of first member 10.

Third member 30 is melted by arc 5. Third member 30 includes first joint 35 welded to first member 10 and second joint 36 welded to first joint 35 and constituting flange 31.

Specifically, when third member 30 having been melted is welded to first member 10 via penetrating part 21, short circuit welding in which spread of arc 5 is small is performed with heat input necessary for melting to form first joint 35 having a recessed upper center. Thereafter, pulse welding with positive polarity or alternating current in which arc 5 spreads largely is performed with such a low heat input not to melt second member 20, and third member 30 having been melted spreads along the recessed shape of the upper center of first joint 35 to form second joint 36. As a result, flange 31 can be formed while suppressing heat input amount to second member 20.

In a process in which third member 30 having been melted becomes bead, third member 30 is provided with first joint 35 and second joint 36. First joint 35 is melt-bonded to the inner peripheral surface and the bottom of non-through hole 11 of first member 10 and opening surface 10a of first member 10. Second joint 36 is melt-bonded to first joint 35 to constitute flange 31 pressing peripheral edge 23.

As third member 30 solidifies and contracts, second member 20 is compressed by flange 31 and first member 10. By this compression, second member 20 as a dissimilar material is fixed between flange 31 and first member 10.

As described above, in the joining structure according to the present exemplary embodiment, third member 30 is formed separately into first joint 35 and second joint 36, and it is therefore possible to selectively use a welding method or a welding condition in consideration of material characteristics of second member 20.

### «Other exemplary embodiments»

The above exemplary embodiments may have the following configuration.

In the present exemplary embodiment, arc welding is performed on non-through hole 11 of first member 10, but for example, laser filler welding may be performed.

Further, a combination of the shape of non-through hole 11 of first member 10 and the shape of penetrating part 21 of second member 20 described in the present exemplary embodiment is merely an example, and other combinations may be adopted.

### INDUSTRIAL APPLICABILITY

As described above, the present invention is significantly useful and has high industrial applicability because it is possible to obtain a highly practical effect that the welding area of the filler material can be increased to secure the joining strength.

### REFERENCE MARKS IN THE DRAWINGS

- 10: first member
- 11: non-through hole
- 12: bottom
- 13: inclined part
- 20: second member
- 21: penetrating part
- 22: tapered part
- 23: peripheral edge
- 25: step
- 30: third member
- 31: flange
- 35: first joint
- 36: second joint
- 40: fixing member
- 42: fixing hole

## Claims

1. Ajoining structure joining, to each other, a first member including a metal material, a second member including a material that is difficult to weld to the first member, and a third member including a filler material welded to the first member, wherein
the first member includes a non-through hole having a depth not penetrating in a thickness direction,
the second member includes a penetrating part that opens at a position corresponding to the non-through hole,
the third member includes a flange that presses a peripheral edge of the penetrating part, and is arc-welded, via the penetrating part, to an inner peripheral surface and a bottom of the non-through hole of the first member and an opening surface of the first member opened by the penetrating part of the second member, and
the second member is compressed by the flange and the first member by solidification contraction of the third member, and thus the second member is fixed between the flange and the first member.

2. The joining structure according to claim 1, wherein the flange protrudes radially outward from the penetrating part on a surface of the second member opposite to the first member.

3. The joining structure according to claim 1, wherein
the penetrating part is defined by the peripheral edge,
the peripheral edge includes a tapered part tapered toward the first member, and
the flange presses the tapered part.

4. The joining structure according to any one of claims 1 to 3, wherein the non-through hole includes a bottom having a flat shape and an inclined part inclined toward the bottom.

5. The joining structure according to any one of claims 1 to 3, wherein the non-through hole has a tapered shape tapered toward the bottom of the non-through hole.

6. The joining structure according to any one of claims 1 to 3, wherein the non-through hole has a tapered shape that widens toward the bottom of the non-through hole.

7. The joining structure according to any one of claims 1 to 6, wherein the non-through hole includes a plurality of small non-through holes smaller than the non-through hole.

8. The joining structure according to any one of claims 1 to 7, comprising a fixing member overlapped with a surface of the second member opposite to the first member, wherein
the fixing member has a fixing hole that opens at a position corresponding to the penetrating part and the non-through hole,
the third member is arc-welded, via the fixing hole and the penetrating part, to the inner peripheral surface and the bottom of the non-through hole and the opening surface of the first member opened by the penetrating part of the second member,
the flange presses the peripheral edge of the penetrating part via the fixing member, and
the fixing member and the second member are compressed by the flange and the first member by solidification contraction of the third member, and thus the fixing member and the second member are fixed between the flange and the first member.

9. The joining structure according to any one of claims 1 to 8, wherein
the second member further includes a step that opens at a surface opposite to the first member, and
the penetrating part is disposed on a bottom surface of the step.

10. The joining structure according to claim 9, wherein the bottom surface of the step is inclined toward the penetrating part.

11. The joining structure according to any one of claims 1 to 10, wherein the third member includes a first joint welded to the first member and a second joint welded to the first joint and constituting the flange.

12. The joining structure according to any one of claims 1 to 11, wherein
the non-through hole has a smaller size than the through hole, and
the opening surface is a region of the upper surface of the first member within the penetrating part.

13. A joining structure comprising:
a first member having an upper surface, a lower surface opposite to the upper surface, and a non-through hole disposed on the upper surface, the first member including a metal material;
a second member including a penetrating part that opens at a position corresponding to the non-through hole and is larger than the non-through hole, and a peripheral edge that defines the penetrating part, including a material that is difficult to weld to the first member, and disposed on the upper surface of the first member; and
a third member including a welded part arc-welded to an inner peripheral surface and a bottom of the non-through hole and a periphery of the non-through hole on the upper surface of the first member, and a flange connected to the welded part via the penetrating part and covering the peripheral edge, the third member including a filler material welded to the first member, wherein the second member is compressed by the flange and the first member by solidification contraction of the third member and thus fixed between the flange and the first member.

14. A joining method comprising:
preparing a first member that has an upper surface and a lower surface opposite to the upper surface, includes a non-through hole disposed on the upper surface, and includes a metal material;
preparing a second member that includes a penetrating part and a peripheral edge defining the penetrating part, and includes a material that is difficult to weld to the first member;
arranging the second member on the upper surface of the first member for the penetrating part to be located corresponding to the non-through hole and for an opening surface of the first member opened by the penetrating part to be formed;
forming a third member including a filler material welded to the first member by arc-welding, via the penetrating part, to an inner peripheral surface and a bottom of the non-through hole of the first member and the opening surface of the first member, the third member including a flange that presses the peripheral edge; and
fixing the second member between the flange and the first member by the second member being compressed by the flange and the first member by solidification contraction of the third member.
